# EUROPEAN PATENT SPECIFICATION

(11) **EP 2 592 326 B1**
(45) Date of publication and mention of the grant of the patent: **23.07.2014**
(21) Application number: 11188501.8
(22) Date of filing: 09.11.2011
(51) Int. Cl.: F16P 1/06, B23K 26/70

(54) **Active laser guarding system**
Aktives Laserschutzsystem
Système de sécurisation actif pour laser

(43) Date of publication of application: 15.05.2013
(73) Proprietor: Lasermet Limited, Bournemouth Dorset BH9 1HR (GB)
(72) Inventor: Ward, Stuart, Dorset, BH10 6HP (GB)
(74) Representative: Wilson, Alan Stuart

(56) References cited:
- GB-A- 2 108 742
- GB-A- 2 182 746
- US-A1- 2008 112 447
- US-A1- 2011 260 737

## Description

The present invention relates to an active laser guarding system and particularly but not exclusively relates to such a system for use in a laser enclosure.

Lasers are used increasingly in various processes including manufacturing processes, and often in materials processing. When a laser is used in a laser enclosure, which may, for example, be a relatively small enclosure cabinet, or a room in a building, the laser beam may be accidentally directly or indirectly incident on the walls, floors, or ceiling of the enclosure for example.

With the development of lasers with higher power it is becoming increasingly challenging to provide a safe containment that protects users and the surrounding environment from injury and damage from stray laser light. Modern high power lasers can readily cut through almost any material including steel and concrete for example.

The damage caused by a stray laser beam may include damage to the surface or appearance of the object, burning a hole right through the object, fire damage, or injury to an operator of the laser or any other person who is in the path of the laser beam. In fact a significant risk could be presented to persons who may be outside a room containing a laser who would be totally unprepared for the sudden emergence of the laser beam through the wall. Furthermore the risk is often heightened as most high power laser beams are infra-red and therefore invisible.

GB 2108742 A discloses a laser safety screen with an electrical conductor formed on the surface. A detector monitors the conduct for changes in resistance which may be used to switch off the laser.

We have previously proposed an active laser guarding system comprising a protective screen provided with an electrically conductive path connected to a fail-safe circuit. If the laser beam is incident on part of the conductive path, the laser beam breaks the conductive path, and the fail safe circuit deactivates the laser beam.

However, it can be a problem with such a system that the path can remain conductive even after being struck by the laser beam, with the result that the fail-safe circuit does not, or does not always, deactivate the laser beam.

The present invention stems from some work in trying to alleviate the above problem. Through this work, we have unexpectedly determined that the carbonisation that typically occurs at the area of incidence of the laser beam, can be sufficiently electrically conductive that the carbonisation electrically connects the broken conductive path, or serves to prevent the conductive path being broken at all. In such a circumstance, the conductive path continues to conduct electricity even after being hit by a laser beam, and this leads to the detector not deactivating the laser as it should do.

According to a first aspect of the invention there is provided an active laser guarding system comprising at least one screen provided with at least two spaced apart conductors each defining a respective electrically conductive path that is electrically separate from the other, the screen comprising material, at least between the two conductors, which is arranged to carbonise when struck by a laser beam to form a further conductive path which extends between, and electrically connects, the two conductors, the system further comprising a detector operative to detect the further conductive path so formed, the detector being operative to generate a laser deactivation signal response to detecting the further conductive path.

Preferably each conductor is elongate so as to extend along at least part of the screen. Most preferably each conductor extends across the entire screen.

More than two conductors may be provided.

Preferably the detector is also operative to detect whether a conductor is electrically broken and to generate the laser deactivation signal in response to detecting the broken conductor(s).

Preferably the screen comprises a printed circuit board (PCB).

Preferably the screen is of sheet form.

Preferably the screen comprises at least one connector to mate with a corresponding connector on another screen to enable the screen to be physically and electrically connected to another screen. This may be useful in forming a composite screen assembly comprised of multiple screens connected together to cover a larger area.

Preferably the connector comprises electrical sub connectors which connect the conductors of one screen to the conductors of an adjacent screen.

The invention provides a laser assembly comprising a laser and an active laser guarding system according to the first aspect of the invention.

The invention further provides a laser enclosure comprising an active laser guarding system according to the first aspect of the invention.

The enclosure may comprise multiple screens connected together to form a screen assembly.

Other aspects of the present invention may include any combination of the features or limitations referred to herein.

The present invention may be carried into practice in various ways, but embodiments will now be described by way of example only with reference to the accompanying drawings in which:
**Figure 1** is a schematic view of an active laser guarding system in accordance with the present invention;
**Figure 2** is a perspective view from the front and one side of a laser enclosure incorporating the system of Figure 1;
**Figure 3** is a perspective view from the front and one side of part of the enclosure of Figure 2, with an access door of the enclosure in an open condition; and
**Figure 4** is a schematic view of a further active laser guarding system in accordance with the present invention.

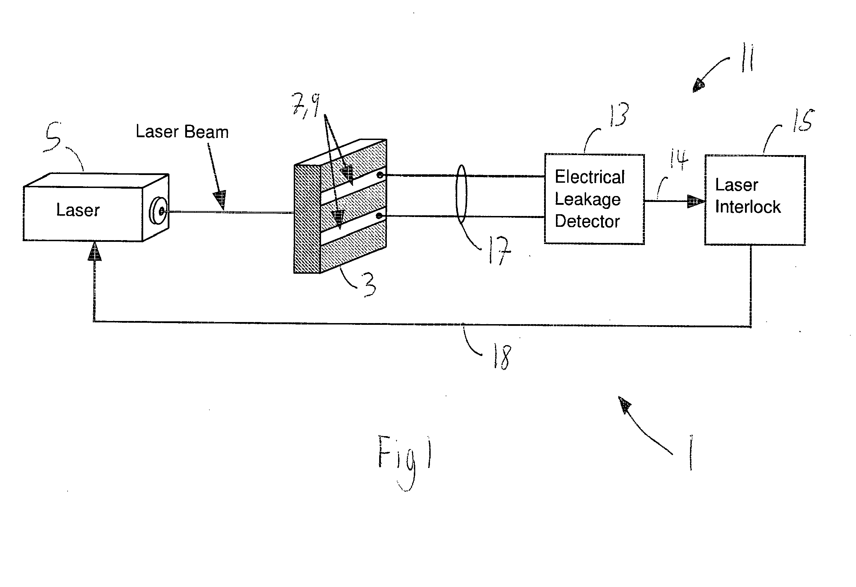

Referring initially to Figure 1 an active laser guarding system 1 comprises a screen 3 for locating between a laser 5 and an object to be protected.

The screen 3, in this example, comprise a planar, oblong sheet of FR4 specification PCB on which at least two spaced apart elongate conductors 7, 9 are provided, each extending across the width of the screen 3. Each conductor 7, 9 defines a respective electrically conductive path, electrically separate from that of the other conductor 7, 9.

The conductors 7, 9 are electrically connected to an electronic controller 11 which comprises a detector 13 and a laser control circuit 15. The laser control circuit 15 is operative to generate a control signal which allows the laser 5 to be activated and deactivated. The control signal is used by a separate laser activation circuit (not shown) which activates or deactivates the laser 5 according to the control signal from the laser control circuit 15. The conductors 7, 9 are also connected to an electrical power source which may be provided by the controller 11. The conductors 7, 9 and controller 11 comprise an active monitoring circuit which monitors, activates and deactivates the laser 5 as required.

The detector 13 is operative to detect the flow of electricity along each conductor 7, 9 and to generate an output signal 14 in dependence upon the flow detected. If no flow is detected, the output signal comprises a laser deactivation signal indicative that one or both conductors 7, 9 have been broken and the control circuit 15 is operative to control deactivation of the laser 5.

The detector 13 is also operative to detect the resistance between the conductors 7, 9 and is again operative to generate an output signal 14 indicative of any change of resistance detected that is used by the control circuit 15 to deactivate the laser 5. The resistance is detected over a connection 17 between the conductors 7, 9.

The screen 3, or at least the part of the screen 3 between the two conductors 7, 9, is formed from a material arranged to carbonise when struck by a potentially hazardous laser beam. Any material containing sufficient carbon content can be used. In this example a PCB is used. The material used can be selected in dependence upon the type of laser in question, and the power and wavelength of the emitted laser beam.

When a beam from the laser 5 is incident on the screen 3 adjacent one or other conductor 7, 9, the area at, or adjacent which, the beam is incident carbonises the solid sheet material. We have determined that this region of carbonisation forms a further electrically conductive path 19 that extends between the two conductors 7, 9. This further conductive path 19 reduces the resistance between the two conductors 7, 9, this reduction in resistance being detected by the detector 13 via the resistance measurement taken at connection 17. This reduction in resistance is used by the detector 13 to generate a laser deactivation signal which is processed by the laser control circuit 15 to generate a control signal 18 to deactivate the laser 5, via a separate laser activation circuit (not shown).

The above described system 1 thus solves the problem caused by carbonisation around the area of incidence of the laser beam not breaking the conductive path because our system 1 uses the conductive properties of the carbonisation to deactivate the laser 5, rather than requiring the conductive path to be cut to deactivate the laser 5.

The above described system 1 can be used in any situation where it may be required or desired to actively guard against laser beams accidentally being misdirected. Thus the screen 3 could comprise a simple wall panel for example, or could form a lining to a laser enclosure such as a cabinet or a room of a building. If used in an enclosure multiple screens 3 can be connected together as required to form a screen assembly. The screen assembly may cover the walls, ceiling and/or floor of the enclosure as required. A supporting framework (not shown) may be provided on which the screens 3 are mounted.

The screen 3 may comprise a connector to enable multiple screens 3 to be quickly and removably connected together. In this way a damaged screen 3 may be easily replaced. The screens 3 may therefore be modular. For example each screen 3 may be provided with a snap or push fit connector that mates with a corresponding connector on the adjacent screen(s) 3. Each screen 3 may be of a standard size, or bespoke sizes may be provided in cases where the standard size screens 3 cannot fit precisely.

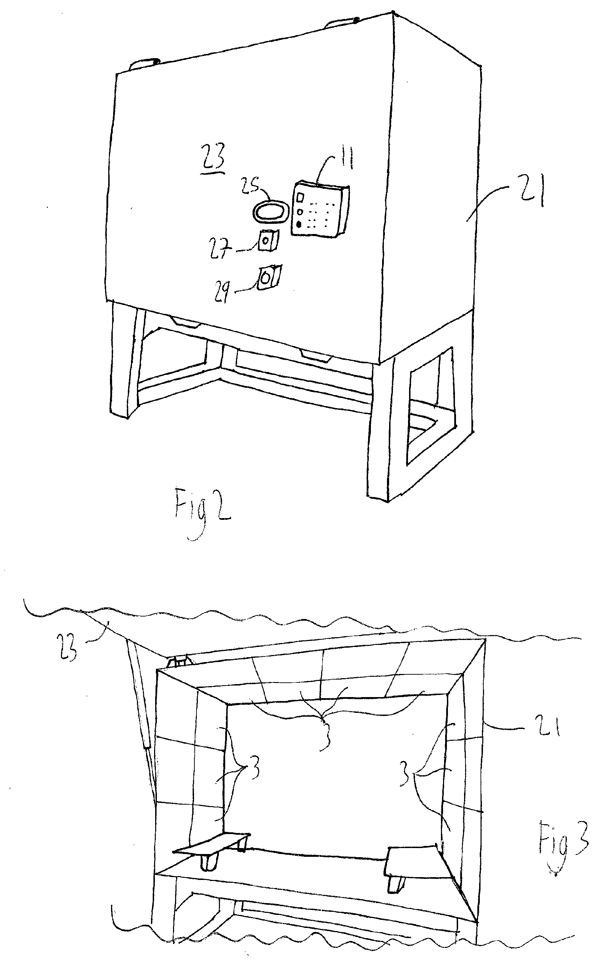

Referring additionally to Figures 2 and 3, a laser enclosure 21 is provided with a system 1 as described above, the interior of the enclosure 21 being lined with a screen assembly comprising multiple screens 3 connected together. The enclosure 21 comprises a hinged access door 23, which may also be lined with screens 3. The exterior of the access door 23 is provided with a warning sign 25 indicative of whether the laser 5 is switched on or off, as well as with a laser arming button 27 and an emergency stop button 29. The controller 11 may be operative to control an interlock provided to lock the door 23 in a closed position when the laser 5 is activated.

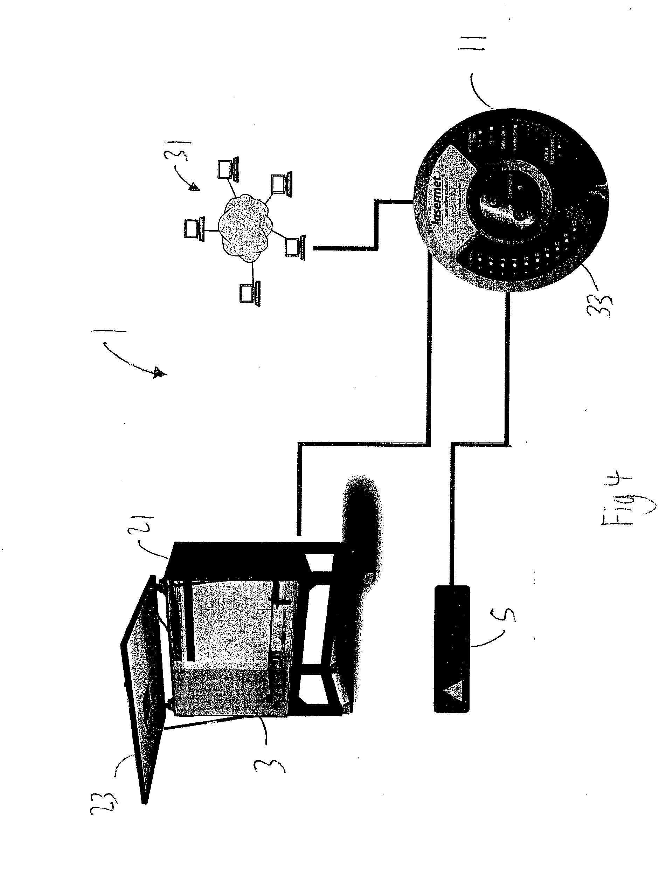

Referring additionally to Figure 4, the system 1 is in use with a laser 5 located in an enclosure 21. In this example, the controller 11 is connected to a remote monitoring network 31 which is operative to monitor the arming/disarming of the laser 5, and which screens 3, if any, are damaged. The controller 11 is provided with a display, in this case an array of LEDs 33, that can alert the operator to the status of the laser 5, and the various screens 3.

Each screen 3 may be provided with more than two conductors 7, 9 if required. The conductors 7, 9 may comprise any suitable electrically conductive material such as wire or metal strips for example, or printed sections of a PCB.

The screen 3 may be formed from, or include, any material that carbonises when subject to the intensified energy of a laser beam. The screens 3 can readily be formed from relatively thin sheet material in the form of tiles or panels that facilitate the construction of a barrier, or lining over a relatively large area.

The output from the detector 13 can be used to control any required safety features which may include the deactivation of the laser 5, the activation of a door lock to prevent access to the area in which the laser 5 is used, the activation of a fire extinguishing system, the activation of a visible or aural alarm, and/or the generation of an error message or report to the operator.

The above described system 1 is advantageously of relatively low cost.

## Claims

1. An active laser guarding system comprising at least one screen (3) provided with at least two spaced apart conductors (7, 9) each defining a respective electrically conductive path that is electrically separate from the other, the screen comprising material, at least between the two conductors, which is arranged to carbonise when struck by a laser beam to form a further conductive path which extends between, and electrically connects, the two conductors, **characterised by** the system further comprising a detector (13) operative to detect the further conductive path so formed, the detector being operative to generate a laser deactivation signal in response to detecting the further conductive path.

2. The system of claim 1 wherein each conductor is elongate so as to extend along at least part of the screen.

3. The system of claim 2 wherein each conductor extends across the entire screen.

4. The system of any one of claims 1 to 3 wherein more than two conductors are provided.

5. The system of any one of the preceding claims wherein the detector is also operative to detect if one, some or all conductor(s) is electrically broken and to generate the laser deactivation signal in response to detecting the broken conductor(s).

6. The system of any one of the preceding claims wherein the screen comprises a printed circuit board (PCB).

7. The system of any one of the preceding claims wherein the screen is of sheet form.

8. The system of any one of the preceding claims wherein the screen comprises a connector to enable the screen to be physically and electrically connected to another screen.

9. The screen of claim 8 wherein the connector comprises electrical sub connectors which connect the conductors of one screen to the conductors of an adjacent screen.

10. A laser assembly comprising a laser and an active laser guarding system according to any preceding claim.

11. A laser enclosure comprising an active laser guarding system according to any preceding claim.

## Patentansprüche

1. Ein aktives Laserschutzsystem, das mindestens eine Abschirmung (3) aufweist, die zumindest zwei im Abstand angeordnete Leiter (7, 9) hat, die jeweils einen elektrisch leitfähigen Pfad definieren, der vom anderen elektrisch getrennt ist, wobei die Abschirmung, zumindest zwischen den beiden Leitern, aus Material besteht, das so angeordnet ist, dass es verkohlt, wenn es von einem Laserstrahl getroffen wird, um einen weiteren leitfähigen Pfad zu bilden, der zwischen den beiden Leitern verläuft und diese elektrisch verbindet, **dadurch gekennzeichnet, dass** das System zudem einen Detektor (13) umfasst, der zur Feststellung des weiteren leitfähigen Pfads, der so gebildet wird, eingesetzt werden kann, wobei der Detektor eingesetzt werden kann, um ein Laserdeaktivierungssignal in Reaktion auf die Feststellung des weiteren leitfähigen Pfads zu erzeugen.

2. Das System entsprechend Anspruch 1, wobei jeder Leiter länglich ist, damit er entlang zumindest eines Teils der Abschirmung verläuft.

3. Das System entsprechend Anspruch 2, wobei sich jeder Leiter über die gesamte Abschirmung erstreckt.

4. Das System entsprechend einem der Ansprüche 1 bis 3, wobei mehr als zwei Leiter bereitgestellt werden.

5. Ein System entsprechend einem der vorhergehenden Ansprüche, wobei der Detektor zudem dafür eingesetzt werden kann, festzustellen, ob einer, mehrere oder alle Leiter elektrisch defekt sind, und um nach Feststellung der/des defekten Leiter/s ein Laserdeaktivierungssignal zu erzeugen.

6. Ein System entsprechend einem der vorhergehenden Ansprüche, wobei die Abschirmung eine gedruckte Leiterplatte (PCB) umfasst.

7. Ein System entsprechend einem der vorhergehenden Ansprüche, wobei die Abschirmung die Form einer Platte hat.

8. Ein System entsprechend einem der vorhergehenden Ansprüche, wobei die Abschirmung einen Anschluss aufweist, damit die Abschirmung physisch und elektrisch an eine andere Abschirmung angeschlossen werden kann.

9. Die Abschirmung entsprechend Anspruch 8, wobei der Anschluss elektrische Nebenanschlüsse aufweist, welche die Leiter einer Abschirmung mit den Leitern der benachbarten Abschirmung verbinden.

10. Eine Lasereinheit bestehend aus einem Laser und einem aktiven Laserschutzsystem entsprechend einem der vorhergehenden Ansprüche.

11. Ein Lasergehäuse mit einem aktiven Laserschutzsystem entsprechend einem der vorhergehenden Ansprüche.

## Revendications

1. Un système de protection de laser actif comprenant au moins un écran (3) équipé d'au moins deux conducteurs espacés (7, 9), chacun d'eux définissant un trajet électriquement conducteur respectif qui est électriquement distinct de l'autre, l'écran comprenant un matériau, au moins entre les deux conducteurs, qui est agencé de façon à se carboniser lorsqu'il est frappé par un faisceau laser de façon à former un autre trajet conducteur qui s'étend entre, et raccorde électriquement, les deux conducteurs, **caractérisé en ce que** le système comprend en outre un détecteur (13) conçu de façon à détecter l'autre trajet conducteur ainsi formé, le détecteur étant conçu de façon à générer un signal de désactivation de laser en réponse à la détection de l'autre trajet conducteur.

2. Le système selon la Revendication 1 où chaque conducteur est allongé de façon à s'étendre le long d'au moins une partie de l'écran.

3. Le système selon la Revendication 2 où chaque conducteur s'étend sur la totalité de l'écran.

4. Le système selon l'une quelconque des Revendications 1 à 3 où plus de deux conducteurs sont fournis.

5. Le système selon l'une quelconque des Revendications précédentes où le détecteur est également conçu de façon à détecter si un ou plusieurs ou tous les conducteurs sont électriquement rompus et de façon à générer le signal de désactivation de laser en réponse à la détection des conducteurs rompus.

6. Le système selon l'une quelconque des Revendications précédentes où l'écran comprend une carte à circuits imprimés (PCB).

7. Le système selon l'une quelconque des Revendications précédentes où l'écran est de type feuille.

8. Le système selon l'une quelconque des Revendications précédentes où l'écran comprend un connecteur destiné à permettre à l'écran d'être physiquement et électriquement raccordé à un autre écran.

9. L'écran selon la Revendication 8 où le connecteur comprend des sous-connecteurs électriques qui raccordent les conducteurs d'un écran aux conducteurs d'un écran adjacent.

10. Un ensemble laser comprenant un laser et un système de protection de laser actif selon l'une quelconque des Revendications précédentes.

11. Une enceinte laser comprenant un système de protection de laser actif selon l'une quelconque des Revendications précédentes.
